# EUROPEAN PATENT SPECIFICATION

(11) **EP 3 487 107 B1**
(45) Date of publication and mention of the grant of the patent: **25.06.2025**
(21) Application number: 17838530.8
(22) Date of filing: 19.07.2017
(51) Int. Cl.: H04L 5/00, H04W 72/04

(54) **USING A VALID TIME PERIOD TO CONTROL TRANSMISSION OF SRS BY A TERMINAL DEVICE**
VERWENDUNG EINER GÜLTIGEN ZEITSPANNE ZUR KONTROLLE DER ÜBERTRAGUNG VON SRS DURCH EIN ENDGERÄT
UTILISATION D'UNE PÉRIODE DE TEMPS VALIDE POUR CONTRÔLER LA TRANSMISSION DE SRS PAR UN DISPOSITIF TERMINAL

(30) Priority: 10.08.2016 CN 201610652011
(43) Date of publication of application: 22.05.2019
(73) Proprietor: Huawei Technologies Co., Ltd., Longgang District Shenzhen, Guangdong 518129 (CN)
(72) Inventor: LYU, Yongxia, Shenzhen Guangdong 518129 (CN); GUO, Zhiheng, Shenzhen Guangdong 518129 (CN); SUN, Wei, Shenzhen Guangdong 518129 (CN)
(74) Representative: Pfenning, Meinig & Partner mbB
(86) International application number: PCT/CN2017/093476
(87) International publication number: WO 2018/028400

(56) References cited:
- EP-A1- 2 779 508
- WO-A1-2014/154171
- CN-A- 102 223 712
- CN-A- 103 095 431
- CN-A- 103 096 346
- CN-A- 103 096 346
- US-A1- 2012 281 654
- US-A1- 2013 286 964
- US-A1- 2015 009 951
- US-A1- 2015 016 489
- US-A1- 2015 043 501

## Description

### TECHNICAL FIELD

This application relates to the field of communications technologies, and in particular, to a reference signal measurement method and apparatus.

### BACKGROUND

A channel state information-reference signal (Channel State Information-Reference Signal, CSI-RS) and a sounding reference signal (Sounding Reference Signal, SRS) are collectively referred to as reference signals. The reference signals are used to detect information about a channel, to determine communication quality of the channel. Existing LTE reference signals are basically scattered over an entire system bandwidth. Considering a forward compatibility requirement, a bandwidth of an NR (or can be called as 5G) reference signal (for example, the CSI-RS or the SRS) should be configurable. In a configuration solution, one subband is separately configured for each user. However, in this way, communication between a terminal device and a base station can be performed in only one subband.

A reference signal of a terminal device exists in only one subband. Therefore, the terminal device or the base station can obtain information about the terminal device in only one subband. When data transmission quality of the terminal device in one subband is poor, because the base station does not have information about the terminal device in another subband, the base station cannot blindly switch the terminal device to another subband, and a data transmission speed of the terminal device is affected.

Alternatively, when the base station needs to flexibly clear a subband, because the base station does not have information about the terminal device in another subband, the base station cannot determine a subband to which communication between the terminal device and the base station is to be switched, causing restrictions on some services of the base station.

WO 2014/154171 A1 discloses a method and device for determining uplink channel state information, and belongs to the technical field of wireless communications. The method comprises: a base station preconfigures a partial sub-bandwidth of the configured bandwidth of a terminal to be a sub-bandwidth used for SRS transmission; the configured bandwidth comprises a plurality of widths being sub-bandwidths of a frequency-hopping bandwidth; the base station receives, on the sub-bandwidth used for SRS transmission, the SRS sent, on the sub-bandwidth used for SRS transmission, by the terminal; the base station determines, according to the SRS received on each sub-bandwidth used for SRS transmission, the uplink channel state information corresponding to each sub-bandwidth used for SRS transmission; the base station determines, according to the uplink channel state information corresponding to each sub-bandwidth used for SRS transmission, the uplink channel state information corresponding to each sub-bandwidth not used for SRS transmission in the configured bandwidth.

US 2012/281654 A1 describes communication method for sounding reference signal transmission. A communication method of a user equipment in a mobile communication system in which a base station apparatus schedules a physical uplink shared channel in an uplink component carrier by using a downlink control information format, the method comprising: receiving, from the base station apparatus, the downlink control information format including first information which instructs to transmit sounding reference signal and second information which indicates the uplink component carrier in which the physical uplink shared channel is scheduled by the downlink control information format, transmitting, to the base station apparatus, sounding reference signal on the uplink component carrier indicated by the second information in case that the first information is detected.

In US 2015/043501 A1 based on a sounding reference signal, a base station apparatus performs efficient scheduling. The base station apparatus includes information for requesting the transmission of the sounding reference signal in a first downlink control information format or a second downlink control information format, and transmits the information to the mobile station apparatus, the mobile station apparatus transmits, based on detection of the information, the sounding reference signal to the base station apparatus, and a first parameter used for the transmission of the sounding reference signal based on the detection of the information included in the first downlink control information format and a second parameter used for the transmission of the sounding reference signal based on the detection of the information included in the second downlink control information format are individually set by a signal of a higher layer transmitted from the base station apparatus.

CN 103096346A discloses a method in which a BS sends to a UE DL control info, DCI, signaling comprising a plurality of SRS configuration informations to a UE. According to information comprised in the DCI, i.e. trigger information, TI, indicating whether the UE is triggered to send an SRS or not, and time information relevant to at least a particular SRS to be transmitted by the UE, the UE selects one of the SRS configuration informations and sends the SRS according to the configuration defined by the selected SRS configuration information.

### SUMMARY

The present invention provide a reference signal sending method, a reference signal receiving method, a terminal, a base station and computer program products according to the appended claims. A plurality of subbands may be configured for one terminal device, to simultaneously obtain reference signals of the plurality of subbands, so that a base station can switch, based on a result of the reference signals, a subband used by the terminal device, thereby maintaining flexibility of a base station side and maximizing data transmission of the terminal device.

According to an aspect, a specific embodiment of the present invention provides a channel state information sending method, including: sending, by a base station, second signaling to a terminal device, where the second signaling includes sounding reference signal SRS information of each of a plurality of subbands, and the SRS information of each subband includes at least a period of an SRS in the subband; receiving, by the base station in at least one of the plurality of subbands, an SRS sent by the terminal device; and measuring, by the base station, the SRS of the at least one subband, to obtain channel state information. Therefore, the base station can receive channel state information of the plurality of subbands, thereby maintaining flexibility of a base station side and maximizing data transmission of the terminal device.

The at least one subband is the same as the plurality of subbands; the first signaling is physical layer signaling, and the physical layer signaling further includes a valid time period; and the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period. The terminal device is controlled, by using more flexible physical layer signaling, to execute the first signaling, thereby reducing overheads on a terminal device side.

In a possible design, the second signaling is higher layer signaling, and after the sending, by a base station, second signaling to a terminal device, the method further includes: sending, by the base station, first physical layer signaling to the terminal device, where the first physical layer signaling is used to instruct the terminal device to send the SRS of the at least one subband to the base station. The terminal device is controlled, by using more flexible physical layer signaling, to execute the first signaling, thereby reducing overheads on a terminal device side.

In a possible design, the second signaling is higher layer signaling, and after the sending, by a base station, second signaling to a terminal device, the method further includes: sending, by the base station, second physical layer signaling to the terminal device, where the second physical layer signaling is used to instruct the terminal device to stop sending the SRS of the at least one subband to the base station. The terminal device is controlled, by using more flexible physical layer signaling, to execute the first signaling, thereby reducing overheads on a terminal device side.

According to yet another aspect, a specific embodiment of the present invention provides a channel state information sending method, including: receiving, by a terminal device, second signaling sent by a base station, where the second signaling includes sounding reference signal SRS information of each of a plurality of subbands, and the SRS information of each subband includes at least a period of an SRS in the subband; sending, by the terminal device, a sounding reference signal SRS of at least one subband to the base station; and sending, by the terminal device, the SRS in at least one of the plurality of subbands. Therefore, the base station can receive channel state information of the plurality of subbands, thereby maintaining flexibility of a base station side and maximizing data transmission of the terminal device.

The at least one subband is the same as the plurality of subbands; the first signaling is physical layer signaling, and the physical layer signaling further includes a valid time period; and the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period. The terminal device is controlled, by using more flexible physical layer signaling, to execute the first signaling, thereby reducing overheads on a terminal device side.

In a possible design, the second signaling is higher layer signaling, and after the receiving, by a terminal device, second signaling sent by a base station, the method further includes: receiving, by the terminal device, first physical layer signaling sent by the base station, where the first physical layer signaling is used to instruct the terminal device to send the SRS of the at least one subband to the base station. The terminal device is controlled, by using more flexible physical layer signaling, to execute the first signaling, thereby reducing overheads on a terminal device side.

In a possible design, the second signaling is higher layer signaling, and after the receiving, by a terminal device, second signaling sent by a base station, the method further includes: receiving, by the terminal device, second physical layer signaling sent by the base station, where the second physical layer signaling is used to instruct the terminal device to stop sending the SRS of the at least one subband to the base station. The terminal device is controlled, by using more flexible physical layer signaling, to execute the first signaling, thereby reducing overheads on a terminal device side.

According to a yet further aspect, a specific embodiment of the present invention provides a base station. The base station includes: a sending unit, configured to send second signaling to a terminal device, where the second signaling includes sounding reference signal SRS information of each of a plurality of subbands, and the SRS information of each subband includes at least a period of an SRS in the subband; a receiving unit, configured to receive, in at least one of the plurality of subbands, an SRS sent by the terminal device; and a processing unit, configured to measure the received SRS of the at least one subband, to obtain channel state information. Therefore, the base station can receive channel state information of the plurality of subbands, thereby maintaining flexibility of a base station side and maximizing data transmission of the terminal device.

The at least one subband is the same as the plurality of subbands; the first signaling is physical layer signaling, and the physical layer signaling further includes a valid time period; and the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period. The terminal device is controlled, by using more flexible physical layer signaling, to execute the first signaling, thereby reducing overheads on a terminal device side.

In a possible design, the second signaling is higher layer signaling; and the sending unit is further configured to send first physical layer signaling to the terminal device after sending the second signaling to the terminal device, where the first physical layer signaling is used to instruct the terminal device to send the SRS of the at least one subband to the base station. The terminal device is controlled, by using more flexible physical layer signaling, to execute the first signaling, thereby reducing overheads on a terminal device side.

In a possible design, the second signaling is higher layer signaling; and the sending unit is further configured to send second physical layer signaling to the terminal device after sending the first signaling to the terminal device, where the second physical layer signaling is used to instruct the terminal device to stop sending the SRS of the at least one subband to the base station. The terminal device is controlled, by using more flexible physical layer signaling, to execute the first signaling, thereby reducing overheads on a terminal device side.

According to a still yet further aspect, a specific embodiment of the present invention provides a terminal device, including: a receiving unit, configured to receive second signaling sent by a base station, where the second signaling includes sounding reference signal SRS information of each of a plurality of subbands, and the SRS information of each subband includes at least a period of an SRS in the subband; and a sending unit, configured to send a sounding reference signal SRS of at least one subband to the base station, where the sending unit is further configured to send the SRS in at least one of the plurality of subbands. Therefore, the base station can receive channel state information of the plurality of subbands, thereby maintaining flexibility of a base station side and maximizing data transmission of the terminal device.

The at least one subband is the same as the plurality of subbands; the first signaling is physical layer signaling, and the physical layer signaling further includes a valid time period; and the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period. The terminal device is controlled, by using more flexible physical layer signaling, to execute the first signaling, thereby reducing overheads on a terminal device side.

In a possible design, the second signaling is higher layer signaling; and the receiving unit is further configured to receive first physical layer signaling sent by the base station after receiving the second signaling sent by the base station, where the first physical layer signaling is used to instruct the terminal device to send the SRS of the at least one subband to the base station. The terminal device is controlled, by using more flexible physical layer signaling, to execute the first signaling, thereby reducing overheads on a terminal device side.

In a possible design, the second signaling is higher layer signaling; and the receiving unit is further configured to receive second physical layer signaling sent by the base station after receiving the second signaling sent by the base station, where the second physical layer signaling is used to instruct the terminal device to stop sending the SRS of the at least one subband to the base station. The terminal device is controlled, by using more flexible physical layer signaling, to execute the first signaling, thereby reducing overheads on a terminal device side.

This application provides a reference signal measurement method and apparatus. A plurality of subbands are configured for one terminal device, to simultaneously obtain reference signals of the plurality of subbands, so that a base station can switch, based on a result of the reference signals, a subband used by the terminal device, thereby maintaining flexibility of a base station side and maximizing data transmission of the terminal device.

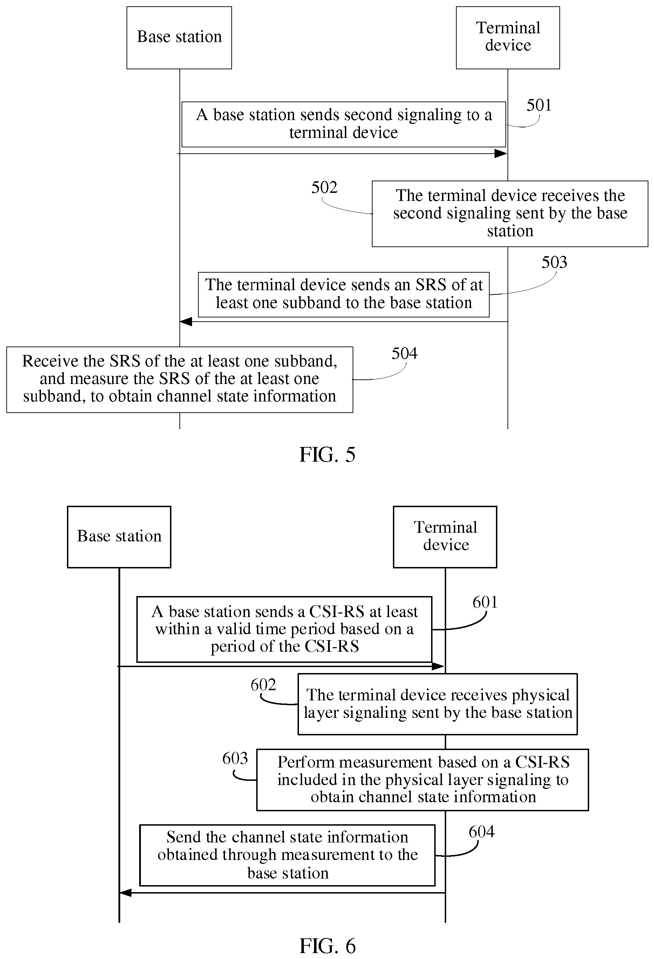

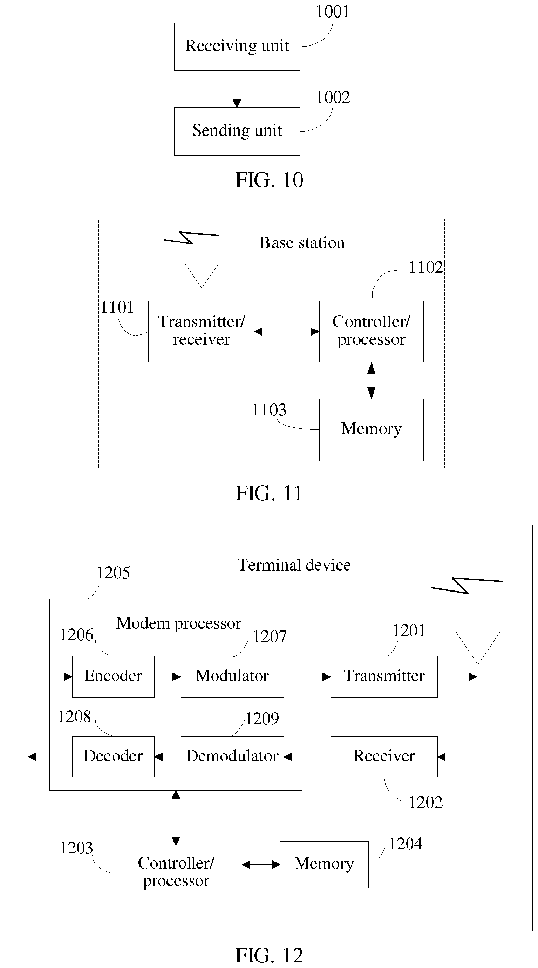

In the following, the invention is best understood in view of figures 5 and 10. The remaining embodiments, aspects and examples disclosed below are included for illustrative purposes and for facilitating the understanding of the invention.

### BRIEF DESCRIPTION OF DRAWINGS

FIG. 1 is a schematic diagram of a communications system according to an embodiment of the present invention;
FIG. 2 is a flowchart of a CSI-RS measurement method according to an example useful for understanding the present invention;
FIG. 3 shows patterns of CSI-RSs with a normal cyclic prefix according to an example useful for understanding the present invention;
FIG. 4 shows patterns of CSI-RSs with an extended cyclic prefix according to an example useful for understanding the present invention;
FIG. 5 is a flowchart of an SRS measurement method according to a specific embodiment of the present invention;
FIG. 6 is a flowchart of another CSI-RS measurement method according to an example useful for understanding the present invention;
FIG. 7 is a schematic structural diagram of a base station according to a specific example useful for understanding the present invention;
FIG. 8 is a schematic structural diagram of a terminal device according to a specific example useful for understanding the present invention;
FIG. 9 is a schematic structural diagram of a base station according to a specific embodiment of the present invention;
FIG. 10 is a schematic structural diagram of a terminal device according to a specific embodiment of the present invention;
FIG. 11 is a possible schematic structural diagram of the base station in the foregoing embodiments; and
FIG. 12 is a simplified schematic diagram of a possible design structure of the terminal device in the foregoing embodiments.

### DESCRIPTION OF EMBODIMENTS

The technical solutions of this application are further described in the following in detail with reference to the accompanying drawings and embodiments.

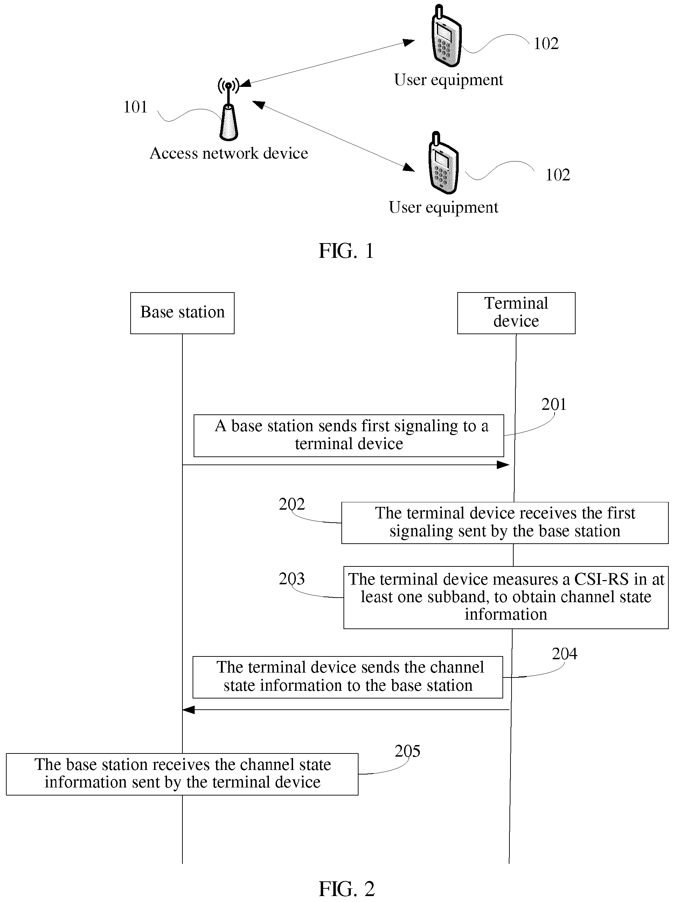

FIG. 1 is a schematic diagram of a communications system according to an embodiment of the present invention. As shown in FIG. 1, an architecture of the system may specifically include an access network device 101 and a plurality of terminal devices 102 (User Equipment, UE for short). The access network device 101 may communicate with the plurality of terminal devices 102. The access network device 101 communicates with the plurality of terminal devices 102 through transmission by using a channel. The channel may be divided into a plurality of subbands. The access network device 101 communicates with any terminal device 102 in a subband.

A specific embodiment of the present invention provides a reference signal measurement method and apparatus. According to the method and the apparatus, a parameter of signaling that is sent by the access network device 101 to the terminal devices 102 and that is used for measurement of a channel state information-reference signal is enabled to include a plurality of subbands, so that channel state information-reference signals obtained by the terminal devices 102 and a sounding reference signal obtained by the access network device 101 include channel state information-reference signals and sounding reference signals of the plurality of subbands. The plurality of subbands include a channel used in current communication between the access network device 101 and the terminal device 102. The terminal devices 102 send the obtained channel state information-reference signals to the access network device 101. The access network device 101 determines, based on the obtained channel state information-reference signals and the obtained sounding reference signal, quality of the current channel used in communication between the access network device 101 and the terminal devices 102, so that when the quality of the channel used in the current communication between the access network device 101 and the terminal devices 102 is poor or when the access network device 101 needs to clear a subband, the channel used in the current communication between the access network device 101 and the terminal devices 102 is switched to another subband that is of the plurality of subbands and that has better channel quality. Therefore, flexibility of use of a time-frequency resource can be maximized, and flexibility of an access network device 101 side and a data throughput on a terminal device 102 side are improved.

The terminal devices 102 may include various handheld devices having a wireless communications function, in-vehicle devices, wearable devices, computing devices or other processing devices connected to a wireless modem, and various forms of terminal devices (User Equipment, UE for short), mobile stations (Mobile station, MS for short), terminals (terminal), terminal equipments (Terminal Equipment), or the like. For ease of description, in this application, the devices mentioned above are collectively referred to as a first terminal device or UE.

The access network device 101 may be an apparatus that is deployed in a radio access network and that is configured to provide a wireless communications function for UE or a WD. The apparatus may include various forms of macro base stations, micro base stations, regeneration stations, access points, or the like. In systems using different radio access technologies, names of devices having a base station function may be different. For example, in an LTE (Long Term Evolution, LTE for short) network, a device having the base station function is referred to as an evolved NodeB (evolved NodeB, eNB or eNodeB for short), and in a third generation 3G network, a device having the base station function is referred to as a node B (Node B). For ease of description, in this application, the foregoing apparatuses providing the wireless communication function for the UE are collectively referred to as a base station or an eNB.

The technologies described in the present invention may be applied to a Long Term Evolution (Long Term Evolution, LTE for short) system, or other wireless communications systems using various radio access technologies, for example, systems using access technologies such as Code Division Multiple Access, Frequency Division Multiple Access, Time Division Multiple Access, orthogonal frequency division multiple access, and single carrier frequency division multiple access. In addition, the technologies described in the present invention may be applied to a subsequent evolved system, such as a fifth-generation 5G system, using the LTE system. For clarity, the LTE system is used only as an example herein for description. In the LTE system, an evolved universal terrestrial radio access network (Evolved Universal Terrestrial Radio Access Network, E-UTRAN for short) is used as a radio access network, and an evolved packet core (Evolved Packet Core, EPC for short) is used as a core network. The UE accesses an IMS network by using the E-UTRAN and the EPC.

In a specific embodiment of the present invention, a reference signal includes a channel state information-reference signal (Channel State Information-Reference Signal, CSI-RS) and a sounding reference signal (Sounding Reference Signal, SRS). The CSI-RS is used for downlink channel measurement, and the SRS is used for uplink channel measurement. The base station evaluates, based on the obtained CSI-RS and the obtained SRS, a channel used in communication between the base station and the terminal device. When the base station determines, based on the obtained CSI-RS and the obtained SRS, that quality of the channel used in the current communication between the base station and the terminal device is poor or when the base station needs to clear a subband, the communication between the base station and the terminal device is switched to another channel.

The following describes in detail a method for measuring CSI-RSs of a plurality of subbands in an example usefule to understand the present invention.

FIG. 2 is a flowchart of a CSI-RS measurement method according to a specific example of the present invention. The method may be applied to the communications system shown in FIG. 1. As shown in FIG. 2, the method may include the following steps.

S201. A base station sends first signaling to a terminal device.

The first signaling includes a plurality of subbands and SRS information for each subband. The SRS information for each subband includes channel state information-reference signal CSI-RS information of each subband. The CSI-RS information of each subband includes at least one of: a period of a CSI-RS in the subband, a starting position of the CSI-RS in the subband, an offset position of the CSI-RS in the subband, and a port number of the CSI-RS in the subband.

Before the first signaling is sent to the terminal device, the method further includes: configuring the first signaling. The first signaling configured by the base station includes channel state information-reference signal CSI-RS information of each of a plurality of subbands, and the CSI-RS information of each subband includes at least one of: a period of a CSI-RS in the subband, a starting position of the CSI-RS in the subband, an offset position of the CSI-RS in the subband, and a port number of the CSI-RS in the subband.

In an example useful for understanding the present invention, that one piece of signaling includes a plurality of subbands may be that the signaling includes identification information of the plurality of subbands. After receiving signaling, the terminal device may determine, based on identification information of a subband included in the signaling, the subband for executing the signaling.

A channel of the base station is divided into a plurality of subchannels. In a message transmission process between the base station and the terminal device, communication between the base station and the terminal device is performed on a subchannel. Because a system bandwidth needs to be occupied during communication between the base station and the terminal device, a part of the system bandwidth and a data channel are allocated to each subchannel. A system bandwidth allocated to a subchannel is referred to as a subband.

In an example, a system bandwidth is 80 M, the system bandwidth is divided into a plurality of subbands, and each subband corresponds to one subchannel. For example, a channel is divided into a plurality of subchannels: A1, A2, A3 ..., and the plurality of subbands obtained by dividing the system bandwidth are B1, B2, B3 .... The subchannel A1 corresponds to the subband B1, the subchannel A2 corresponds to the subband B2, and the subchannel A3 corresponds to the subband B3. Bandwidths allocated to the subbands may be distinguished by using PRBs (Physical Resource Block, physical resource block). For example, a PRB 1 to a PRB 20 are the subband B1, a PRB 21 to a PRB 40 are the subband B2, a PRB 41 to a PRB 80 are the subband B3, and a PRB 81 to a PRB 100 are the subband B4. The rest can be deduced by analogy. The bandwidths of the subbands may be the same or different.

Alternatively, it may be understood that the system bandwidth is divided into a plurality of subbands, and each subband has a capability of transmitting data within a range corresponding to the subband.

In this example useful for understanding the present invention, the first signaling configured by the base station includes the plurality of subbands. To be specific, after receiving the first signaling, the terminal device can obtain, based on the information included in the first signaling, channel state information of the terminal device in the plurality of subbands. For example, the first signaling includes the subband B1 and the subband B2, so that the terminal device can obtain channel state information of the subband A1 and the subband A2 in the foregoing terminal device. If the subband A1 is a channel used in current communication between the terminal device and the base station, when an eNB intends to clear the subband A1 or when quality of data transmission of the terminal device in the subband A1 is poor, the channel between the base station and the terminal device may be switched to the subband A2.

The configuring the first signaling further includes configuring the channel state information-reference signal CSI-RS information for each subband. For example, the CSI-RS information that is of each subband and that is obtained through measurement by the terminal device includes at least one of: the period of the CSI-RS in the subband, the starting position of the CSI-RS in the subband, the offset position of the CSI-RS in the subband, and the port number of the CSI-RS in the subband.

In an example, to reduce consumption, separate parameters may be configured for different subbands. For example, the parameters corresponding to the subbands include different periods, different offset/starting positions, and different ports (port).

For example, subbands corresponding to B1 and B2 are configured. B1 is a main subband for data scheduling of the terminal device. The base station communicates with the terminal device by using a subband corresponding to the subband B1. Therefore, when a CSI-RS of the subband B1 is obtained, a short period can make a change in communication quality of the subband corresponding to the subband B1 to be obtained in time and then switching is performed. B2 is a candidate subband for data transmission of the terminal device. Therefore, when a CSI-RS of the subband B2 is obtained, the period is long.

The base station sends the configured first signaling to the terminal device. The base station sends the CSI-RS to user equipment in at least one of the plurality of subbands. For example, the first signaling includes the subband B1 and the subband B2. The subband B1 is a subband used in current communication between the base station and the terminal device. The subband B2 is a candidate subband. The base station sends the first signaling to the terminal device by using the subband B1. The terminal device obtains, based on the first signaling, channel state information of the plurality of subbands that are included in the first signaling.

The base station may send the first signaling to the terminal device by using higher layer signaling or by using physical layer signaling.

S202. The terminal device receives the first signaling sent by the base station.

The first signaling includes a related parameter corresponding to each of the plurality of subbands. The related parameter includes the channel state information-reference signal CSI-RS information of each of the plurality of subbands. The CSI-RS information of each subband includes at least one of: the period of the CSI-RS in the subband, the starting position of the CSI-RS in the subband, the offset position of the CSI-RS in the subband, and the port number of the CSI-RS in the subband. The first signaling is used to enable the terminal device to perform measurement to obtain the channel state information.

S203. The terminal device measures a CSI-RS in at least one subband, to obtain channel state information.

The terminal device measures, based on the CSI-RS information of each subband, the subbands included in the first signaling, to obtain the channel state information. The measuring, by the terminal device, the plurality of subbands included in the first signaling is measuring, based on the period of the CSI-RS of each subband, each of the plurality of subbands that are included in the first signaling, to obtain the channel state information of the terminal device in the plurality of subbands.

In an example useful for understanding the present invention, the terminal device performing measurement to obtain the channel state information for the plurality of subbands that are included in the first signaling may be performing measurement for each subband, or may be performing measurement for the plurality of subbands simultaneously. Specific measuring frequency is determined based on the period of the CSI-RS of each subband in the first signaling sent by the base station to the terminal device.

In an example useful for understanding the present invention, the terminal device receives the first signaling sent by the base station. The first signaling is used to enable the terminal device to perform measurement to obtain the channel state information. The first signaling includes the CSI-RS information of each subband. The channel state information of each subband included in the first signaling is obtained by using the CSI-RS information of each subband.

Different from the foregoing example, in another specific embodiment of the present invention, the first signaling that is received by the terminal device and that is sent by the base station is sent by using higher layer signaling. After receiving the first signaling, the terminal device stores a plurality of subbands included in the higher layer signaling and SRS information of each of the plurality of subbands, where the SRS information of each subband includes a period of an SRS in the subband, a starting position of the SRS in the subband, an offset position of the SRS in the subband, and a port number of the SRS in the subband, but does not directly execute the first signaling.

The base station further sends first physical layer signaling to the terminal device. The first physical layer signaling may be sent at the time when the first signaling is being sent or may be sent at any time after the first signaling has been sent. This is not limited in the present invention.

After receiving a first physical layer signal used to instruct the terminal device to execute the first signaling, the terminal device executes the first signaling based on the first physical layer signaling, and performs measurement for at least one of the plurality of subbands, to obtain the channel state information of the at least one subband.

The physical layer signaling at least includes a valid time period of the physical layer signaling. For example, if the valid time period of the physical layer signaling is one minute after the physical layer signaling is received, the terminal device starts to execute the higher layer signaling after receiving the physical layer signaling, and stops executing the higher layer signaling after executing the higher layer signaling for one minute. The terminal device executes higher layer signaling again based on newly received physical layer signaling after subsequently receiving the corresponding physical layer signaling.

Obviously, in the foregoing specific implementation, it is considered by default that the terminal device does not directly perform measurement to obtain the channel state information based on the higher layer signaling when receiving the higher layer signaling. In this way, sending density of measuring the channel state information by the terminal device can be maximally reduced, thereby effectively reducing overheads, and also reducing electricity consumption of the terminal device. The terminal device also does not perform measurement to obtain the channel state information by default. Therefore, the terminal device does not need to feed back a corresponding measurement result to the base station, thereby reducing overheads of an uplink control channel. Because the physical layer signaling is very dynamic, the base station can send the physical layer signaling to the terminal device in real time, so that the base station controls, in real time, the terminal device to execute or not execute higher layer signaling, thereby greatly reducing a possibility of always sending a signal, and maintaining forward compatibility.

In still another example useful for understanding the present invention, the first signaling that is received by the terminal device and that is sent by the base station is sent by using the higher layer signaling. After receiving the first signaling, the terminal device stores a plurality of subbands included in the first signaling and channel state information-reference signal CSI-RS information of each of the plurality of subbands, where the CSI-RS information of each subband includes at least one of: a period of a CSI-RS in the subband, a starting position of the CSI-RS in the subband, an offset position of the CSI-RS in the subband, and a port number of the CSI-RS in the subband. The base station is further configured to send to second physical layer signaling to the terminal device. After receiving the second physical layer signaling, the terminal device stops executing the first signaling.

The physical layer signaling at least includes a valid time period of the physical layer signaling. For example, if the valid time period of the physical layer signaling is one hour after the physical layer signaling is received, the terminal device stops executing the first signaling after receiving the physical layer signaling, and continues to execute the first signaling after one hour. The terminal device determines, based on newly received physical layer signaling after subsequently receiving the corresponding physical layer signaling, a state of executing the first signaling.

In the foregoing specific implementation of the present invention, after receiving the first signaling, the terminal device periodically performs measurement to the channel state information based on a configured parameter in the first signaling by default. In addition, an eNB may send physical layer signaling to the terminal device, and dynamically cancel, by using the physical layer signaling, measurement of the channel state information. Therefore, overheads of the terminal device can be effectively reduced, and electricity consumption of the terminal device can also be reduced. The terminal device may not perform measurement to obtain channel state information of one or more subbands according to an indication, and does not need to feed back a corresponding result, thereby reducing overheads of an uplink control channel. Because the physical layer signaling is very dynamic, the base station can dynamically send the physical layer signaling, thereby greatly reducing a possibility of always sending the higher layer signaling, and greatly maintaining forward compatibility.

In a specific embodiment of the present invention, the foregoing specific implementation may be executing first signaling after the first signaling is received, and stopping executing the first signaling after second physical layer signaling is received. Alternatively, the foregoing specific implementation may be not executing first signaling after the first signaling is received, starting to execute first physical layer signaling after the first physical layer signaling is received, and stopping executing the first signaling after second physical layer signaling is received. A combination of the foregoing two implementations or another specific implementation including the foregoing three specific implementations is not further specifically limited in the present invention.

In still another example useful for understanding the present invention, the first signaling that is received by the terminal device and that is sent by the base station is sent by using the physical layer signaling. After receiving the first signaling, the terminal device performs measurement to obtain the channel state information based on the CSI-RS information of each subband included in the first signaling. After the first signaling has been executed, when the channel state information needs to be obtained again, new first signaling needs to be received. Channel state information is obtained based on identifiers of subbands included in the new first signaling, a period of a CSI-RS in each subband, a starting/offset position and a port number for sending a measurement result to the base station, and the like, and the channel state information is sent to the base station.

The first signaling at least includes a valid time period of the first signaling. The valid time period is a valid time period shared by the plurality of subbands, or there may be a plurality of valid time periods. If the valid time period is shared by the plurality of subbands, the valid time period is used to indicate that the terminal device measures, within the valid time period, the CSI-RS sent in the plurality of subbands. For example, if the valid time period of the first signaling is one minute after the first signaling is received, the terminal device starts to execute the first signaling after receiving the first signaling, and stops executing the first signaling after executing the first signaling for one minute.

If there are a plurality of valid time periods, each subband corresponds to one of the plurality of valid time periods, and each valid time period is used to indicate that the terminal device measures, within the valid time period, the CSI-RS sent in a subband corresponding to the valid time period.

After subsequently receiving corresponding first signaling, the terminal device executes the newly received first signaling.

S204. The terminal device sends the channel state information to the base station.

After obtaining the channel state information of the at least one subband, the terminal device may immediately send a channel measurement result to the base station, so that the base station adjusts, based on the obtained channel state information, a subband used in current communication between the terminal device and the base station. In an example, the terminal device may send channel state information of a subband to the base station in a fixed period. A measurement result is sent to the base station once in a period. The measurement result sent once includes the channel state information of the plurality of subbands for which measurement is performed in the period, thereby reducing overheads of an uplink control channel.

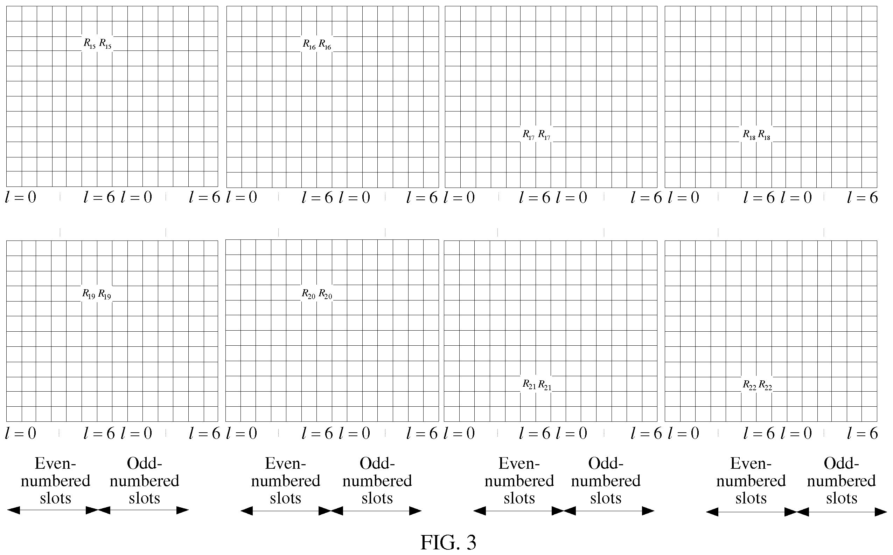

FIG. 3 shows patterns of CSI-RSs with a normal cyclic prefix according to a specific example useful for understanding the present invention. As shown in FIG. 3, a CSI-RS measurement result sent by the terminal device to the base station occupies only two resource elements (Resource Element, RE) in one PRB. R15 represents that an antenna port of sending the information is 15.

For example, R15 and R16 mean that when the CSI-RS measurement result is sent by using the antenna port 15 or an antenna port 16, two REs of a CSI-RS are in a third subcarrier of a symbol 6 and a symbol 7 in a first timeslot.

R17 and R18 mean that when the CSI-RS measurement result is sent by using an antenna port 17 or an antenna port 18, two REs of a CSI-RS are in a ninth subcarrier of a symbol 6 and a symbol 7 in a timeslot.

R19 and R20 mean that when the CSI-RS measurement result is sent by using an antenna port 19 or an antenna port 20, two REs of a CSI-RS are in a fourth subcarrier of a symbol 6 and a symbol 7 in a timeslot.

R21 and R22 mean that when the CSI-RS measurement result is sent by using an antenna port 21 or an antenna port 22, two REs of a CSI-RS are in a tenth subcarrier of a symbol 6 and a symbol 7 in a timeslot.

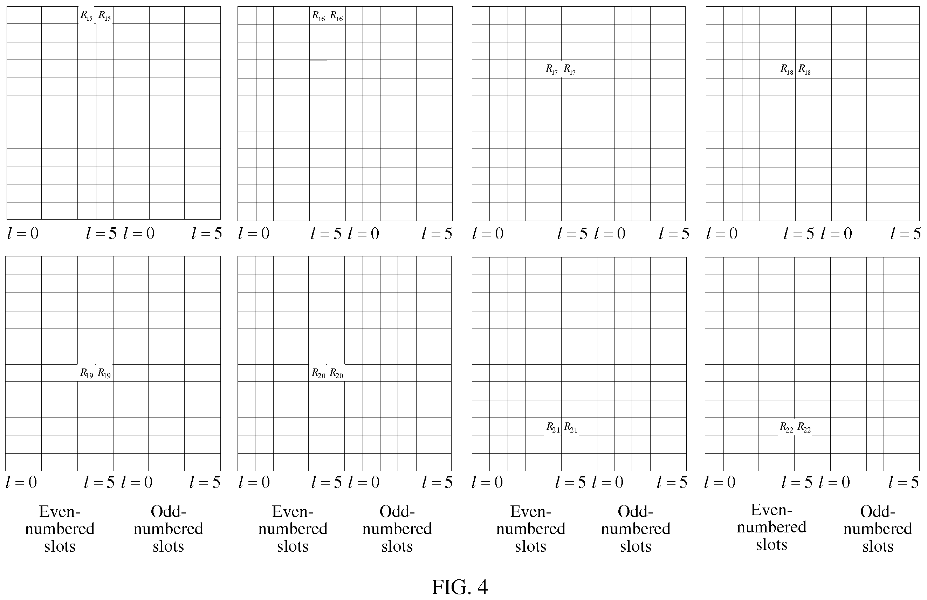

FIG. 4 shows patterns of CSI-RSs with an extended cyclic prefix according to a specific example useful for understanding the present invention. As shown in FIG. 4, a CSI-RS measurement result sent by the terminal device to the base station occupies only two resource elements (Resource Element, RE) in one PRB. R15 represents that an antenna port of sending the information is 15.

For example, R15 and R16 means that when the CSI-RS measurement result is sent by using the antenna port 15 or an antenna port 16, two REs of a CSI-RS are in a first subcarrier of a symbol 5 and a symbol 6 in a first timeslot.

R17 and R18 mean that when the CSI-RS measurement result is sent by using an antenna port 17 or an antenna port 18, two REs of a CSI-RS are in a fourth subcarrier of a symbol 5 and a symbol 6 in a timeslot.

R19 and R20 mean that when the CSI-RS measurement result is sent by using an antenna port 19 or an antenna port 20, two REs of a CSI-RS are in a seventh subcarrier of a symbol 5 and a symbol 6 in a timeslot.

R21 and R22 mean that when the CSI-RS measurement result is sent by using an antenna port 21 or an antenna port 22, two REs of a CSI-RS are in a tenth subcarrier of a symbol 5 and a symbol 6 in a timeslot.

S205. The base station receives the channel state information sent by the terminal device.

In an example, a result that is of a CSI-RS measured by a terminal device A and that is received by the base station includes measurement results of a subband 0110 and a subband 0111. The subband 0110 is a subband used in current communication between the base station and the terminal device A. The subband 0111 is a candidate communications channel between the base station and the terminal device A. If the base station determines, based on the result, that communication quality of the subband 0110 is poor and communication quality of the subband 0111 is relatively good, the base station changes the channel used in communication with the terminal device A from the subband 0110 into the subband 0111.

The following describes in detail a method for measuring SRSs of a plurality of subbands in a specific embodiment of the present invention.

FIG. 5 is a flowchart of an SRS measurement method according to a specific embodiment of the present invention. The method may be applied to the communications system shown in FIG. 1. As shown in FIG. 5, the method may include the following steps.

S501. A base station sends second signaling to a terminal device.

The second signaling includes sounding reference signal (Sounding Reference Signal, SRS) information of each of a plurality of subbands. The SRS information of each subband includes at least a period of an SRS in the subband.

Before the second signaling is sent to the terminal device, the method further includes: configuring, by the base station, the second signaling. The second signaling configured by the base station includes the plurality of subbands and the SRS information of each subband. The SRS information of each subband includes at least the period of the SRS in the subband.

In a specific embodiment of the present invention, that one piece of signaling includes a plurality of subbands may be that the signaling includes identification information of the plurality of subbands. After receiving signaling, the terminal device may determine, based on identification information of a subband included in the signaling, the subband for executing the signaling.

A channel of the base station is divided into a plurality of subchannels. Communication between the base station and the terminal device is performed on a subchannel. In a message transmission process between the base station and the terminal device, communication between the base station and the terminal device is performed on a subchannel. Because a system bandwidth and a data channel need to be occupied during communication between the base station and the terminal device, a part of the system bandwidth is further allocated to each subband. A bandwidth occupied on one subchannel is referred to as a subband.

In an example, a system bandwidth is 80 M, the system bandwidth is divided into a plurality of subbands, and each subband corresponds to one subchannel. For example, a channel is divided into a plurality of subchannels: A1, A2, A3 ..., and the plurality of subbands obtained by dividing the system bandwidth are B1, B2, B3 .... The subchannel A1 corresponds to the subband B1, the subchannel A2 corresponds to the subband B2, and the subchannel A3 corresponds to the subband B3. Bandwidths allocated to the subbands may be distinguished by using PRBs (Physical Resource Block, physical resource block). For example, a PRB 1 to a PRB 20 are the subband B1, a PRB 21 to a PRB 40 are the subband B2, a PRB 41 to a PRB 80 are the subband B3, and a PRB 81 to a PRB 100 are the subband B4. The rest can be deduced by analogy. The bandwidths of the subbands may be the same or different. The base station communicates with the terminal device by using a subband on a subchannel.

Alternatively, it may be understood that a channel is divided into a plurality of subbands, and each subband has a data transmission capability of a subband corresponding to each subchannel.

In a specific embodiment of the present invention, the plurality of subbands in the second signaling configured by the base station include at least two subbands, so that the base station can obtain sounding reference signals of the corresponding terminal device in the at least two subbands after executing the second signaling.

For example, the second signaling includes the subband B1 and the subband B2, so that the base station can obtain sounding reference signals of the subband B1 and the subband B2 on the foregoing channel. If the subband B1 is a channel used in current communication between the terminal device and the base station, when an eNB intends to clear the subband B1 or when quality of data transmission of the terminal device in the subband B1 is poor, the channel between the base station and the terminal device may be switched from the subband B1 to the subband B2.

The second signaling further includes information that is used for obtaining a sounding reference signal and that is configured for each of the plurality of subbands, for example, the period of the SRS in each subband, an offset/starting position and a port (port) for sending a measurement result to the base station. In an example, to reduce consumption, separate parameters may be configured for subbands having different functions. For example, the SRS information of each subband includes at leastthe period of the SRS in the subband.

For example, subbands corresponding to B1 and B2 are configured. B1 is a main subband for data scheduling of the terminal device. The base station communicates with the terminal device by using a subband corresponding to the subband B1. Therefore, when the base station obtains an SRS of the subband B1, a short period can make a change in communication quality of the subband corresponding to the subband B1 to be obtained in time and switching is performed. B2 is a candidate subband for data transmission of the terminal device. Therefore, when an SRS of the subband B2 is obtained, the period is long.

After completing configuring the second signaling, the base station further sends the configured second signaling to the terminal device, so that the terminal device obtains, based on the second signaling, the SRS information of the plurality of subbands that are included in the second signaling.

The second signaling may be sent by using higher layer signaling or by using physical layer signaling.

S502. The terminal device receives the second signaling sent by the base station.

The second signaling includes the plurality of subbands and the SRS information of each subband. The SRS information of each subband included in the SRS information includes at least one of: the period of the SRS in the subband, the starting position of the SRS in the subband, the offset position of the SRS in the subband, and the port number of the SRS in the subband.

S503. The terminal device sends a sounding reference signal to the base station based on the received second signaling.

In a specific embodiment of the present invention, after receiving the second signaling sent by the base station, the terminal device sends, in at least one of the plurality of subbands, an SRS of at least one subband to the base station based on the second signaling. Sending the SRS to the base station is sending an SRS of a subband to the base station based on SRS information of a subband in the second signaling. The base station performs measurement for a subband based on the SRS of the at least one subband sent by the terminal device, to obtain a sounding reference signal of the subband.

Different from the foregoing embodiment, in another specific embodiment of the present invention, the second signaling that is received by the terminal device and that is sent by the base station is sent by using higher layer signaling. After receiving the second signaling, the terminal device stores the sounding reference signal SRS information of each of the plurality of subbands that are included in the second signaling, where the SRS information of each subband includes at least one of: the period of the SRS in the subband, the starting position of the SRS in the subband, the offset position of the SRS in the subband, and the port number of the SRS in the subband, but does not directly send the SRS of the at least one subband to the base station.

The base station is further configured to send first physical layer signaling to user equipment. The terminal device receives the first physical layer signaling, and executes the second signaling based on the first physical layer signaling, to send the SRS of the at least one subband to the base station.

The base station may send the first physical layer signaling to the user equipment at the time when the second signaling is being sent, or may send the first physical layer signaling at any time after the second signaling has been sent.

The first physical layer signaling may directly instruct the terminal device to execute the first signaling, or may instruct the terminal device to execute the first signaling after any time period, and may further instruct the terminal device to execute the second signaling within a time period, or may instruct the terminal device to execute the second signaling in any other manner.

The first physical layer signaling at least includes a valid time period of the first physical layer signaling. For example, if the valid time period of the first physical layer signaling is one minute after the first physical layer signaling is received, the terminal device starts to execute the second signaling after receiving the first physical layer signaling, and stops executing the second signaling after executing the second signaling for one minute. The terminal device executes the second signaling based on newly received first physical layer signaling after subsequently receiving the first physical layer signaling again, to send the SRS of the at least one subband to the base station.

Obviously, in the foregoing specific implementation, it is considered by default that the terminal device does not directly send the SRS of the at least one subband to the base station when receiving the second signaling. In this way, density of sending the SRS by the terminal device can be maximally reduced, thereby reducing overheads of an uplink control channel, and also reducing electricity consumption of the terminal device. The base station does not measure the sounding reference signal, thereby effectively reducing overheads. Because the physical layer signaling is very dynamic, the base station can send the physical layer signaling to the terminal device in real time, so that the base station controls, in real time, the terminal device to execute or not execute the second signaling, thereby greatly reducing a possibility of always sending a signal, and greatly maintaining forward compatibility.

In yet another specific embodiment of the present invention, the second signaling that is received by the terminal device and that is sent by the base station is sent by using the higher layer signaling. After receiving the second signaling, the terminal device stores the sounding reference signal SRS information of each of the plurality of subbands that are included in the second signaling, where the SRS information of each subband includes at least one of: the period of the SRS in the subband, the starting position of the SRS in the subband, the offset position of the SRS in the subband, and the port number of the SRS in the subband, and executes the second signaling, to send the SRS to the base station.

The base station further sends the second physical layer signaling to the terminal device. After receiving the second physical layer signaling, the terminal device stops, according to an indication of the second physical layer signaling, sending the SRS of the at least one subband to the base station.

The second physical layer signaling at least includes a valid time period of the second physical layer signaling. The valid time period of the second physical layer signaling is one hour after the second physical layer signaling is received, and the terminal device stops sending the SRS of the at least one subband to the base station after receiving the second physical layer signaling, and continues to send the SRS of the at least one subband to the base station after one hour. The terminal device determines, based on newly received second physical layer signaling after subsequently receiving the second physical layer signaling, a state of executing the second signaling.

In the foregoing specific implementation of the present invention, after receiving the second signaling, the terminal device periodically sends the SRS of the at least one subband to the base station based on a configured parameter in the second signaling by default. In addition, an eNB sends physical layer signaling to the terminal device, and dynamically cancels, by using the physical layer signaling, sending of the SRS to the base station. Therefore, overheads of the terminal device can be effectively reduced, and electricity consumption of the terminal device can also be reduced. The terminal device may not send the SRS to the base station according to an indication, thereby also reducing overheads of an uplink control channel. Because the physical layer signaling is very dynamic, the base station dynamically sends the physical layer signaling, thereby greatly reducing a possibility of always sending the higher layer signaling, and greatly maintaining forward compatibility.

In a specific embodiment of the present invention, the foregoing specific implementation may be sending the SRS of the at least one subband to the base station after the second signaling is received, and stopping sending the SRS of the at least one subband to the base station after second physical layer signaling is received. Alternatively, the foregoing specific implementation may be not sending the SRS of the at least one subband to the base station after the second signaling is received, starting to send the SRS of the at least one subband to the base station after first physical layer signaling is received, and stopping sending the SRS of the at least one subband to the base station after second physical layer signaling is received. A combination of the foregoing two implementations or another specific implementation including the foregoing three specific implementations is not further specifically limited in the present invention.

In still another specific embodiment of the present invention, the signaling that is received by the terminal device and that is sent by the base station is sent by using the physical layer signaling. After receiving the physical layer signaling, the terminal device uses sounding reference signal SRS information of each of a plurality of subbands that are included in the physical layer signaling. The SRS information of each subband includes at least one of: a period of an SRS in the subband, a starting position of the SRS in the subband, an offset position of the SRS in the subband, and a port number of the SRS in the subband.

The second signaling at least includes a valid time period of the second signaling. The valid time period is a valid time period shared by the plurality of subbands, or there may be a plurality of valid time periods. If the valid time period is shared by the plurality of subbands, the valid time period is used to indicate that the terminal device sends SRSs of the plurality of subbands to the base station within the valid time period. For example, if the valid time period of the second signaling is one minute after the second signaling is received, the terminal device starts to execute the second signaling after receiving the second signaling, and stops executing the second signaling after executing the second signaling for one minute.

If there are a plurality of valid time periods, each subband corresponds to one of the plurality of valid time periods, and each valid time period is used to indicate that the terminal device measures, within the valid time period, the CSI-RS sent in a subband corresponding to the valid time period.

After subsequently receiving corresponding first signaling, the terminal device executes the newly received first signaling.

S504. The base station measures the SRS of the at least one subband, to obtain channel state information.

The base station measures the received SRS. The SRS includes a subband for which the SRS needs to be measured. The base station measures the SRS to obtain uplink channel state information of a subband included in the SRS.

FIG. 6 shows another CSI-RS measurement method according to a specific example useful for understanding the present invention. As shown in FIG. 6, the method further specifically includes the following steps.

S601. A base station sends physical layer signaling to a terminal device, and the base station sends a CSI-RS at least within a valid time period based on a period of the CSI-RS.

The physical layer signaling includes channel state information-reference signal CSI-RS information. The CSI-RS information includes at least one of the valid time period, the period of the CSI-RS, a_starting position of the CSI-RS, an offset position of the CSI-RS, and a port number of the CSI-RS.

The physical layer signaling includes the period of the CSI-RS. The period is used to indicate that the base station sends the CSI-RS to the terminal device based on the period of the CSI-RS, so that the terminal device receives the CSI-RS in each period, and measures the CSI-RS.

The physical layer signaling may include one subband, or may include a plurality of subbands. When the physical layer signaling includes a plurality of subbands, the physical layer signaling includes channel state information-reference signal information of each subband. Each subband may have a same CSI-RS or a different CSI-RS. When the physical layer signaling includes one subband, the base station needs to send physical layer signaling of a plurality of different subbands to a terminal device. The sent physical layer signaling of the plurality of different subbands is determined based on a period of each piece of physical layer signaling, so that the terminal device measures, within the valid time period based on the physical layer signaling, for at least one subband included in the physical layer signaling, to obtain channel state information of the at least one subband.

The measuring, by the terminal device, at least one subband included in the physical layer signaling is measuring, based on a period of the CSI-RS of each subband, each of the plurality of subbands that are included in the physical layer signaling, to obtain channel state information of the terminal device in the at least one subband.

Before the physical layer signaling is sent to the terminal device, the method further includes: configuring the physical layer signaling. The physical layer signaling configured by the base station includes channel state information-reference signal CSI-RS information of the at least one subband. The CSI-RS information includes a valid time period of the physical layer signaling and at least one of: the period of the CSI-RS, the starting position of the CSI-RS, the offset position of the CSI-RS, and the port number of the CSI-RS.

The valid time period is one of the plurality of valid time periods that correspond to each subband. Each valid time period is used to indicate that the terminal device measures, within the valid time period, the CSI-RS sent in a subband corresponding to the valid time period.

In a specific example useful for understanding the present invention, that one piece of signaling includes at least one subband may be that the signaling includes identification information of the at least one subband. After receiving signaling, the terminal device may determine, based on identification information of a subband included in the signaling, the subband for executing the signaling.

A channel of the base station is divided into a plurality of subchannels. In a message transmission process between the base station and the terminal device, communication between the base station and the terminal device is performed on a subchannel. Because a system bandwidth needs to be occupied during communication between the base station and the terminal device, a part of the system bandwidth and a data channel are allocated to each subchannel. A system bandwidth allocated to a subchannel is referred to as a subband.

In an example, a system bandwidth is 80 M, the system bandwidth is divided into a plurality of subbands, and each subband corresponds to one subchannel. For example, a channel is divided into a plurality of subchannels: A1, A2, A3 ..., and the plurality of subbands obtained by dividing the system bandwidth are B1, B2, B3 .... The subchannel A1 corresponds to the subband B1, the subchannel A2 corresponds to the subband B2, and the subchannel A3 corresponds to the subband B3. Bandwidths allocated to the subbands may be distinguished by using PRBs (Physical Resource Block, physical resource block). For example, a PRB 1 to a PRB 20 are the subband B1, a PRB 21 to a PRB 40 are the subband B2, a PRB 41 to a PRB 80 are the subband B3, and a PRB 81 to a PRB 100 are the subband B4. The rest can be deduced by analogy. The bandwidths of the subbands may be the same or different.

Alternatively, it may be understood that the system bandwidth is divided into a plurality of subbands, and each subband has a capability of transmitting data within a range corresponding to the subband.

In this example of the present invention, the physical layer signaling configured by the base station includes the plurality of subbands. To be specific, after receiving the physical layer signaling, the terminal device can obtain, based on information included in the physical layer signaling, channel state information of the terminal device in the plurality of subbands. For example, the physical layer signaling includes the subband B1 and the subband B2, so that the terminal device can obtain channel state information of the subband B1 and the subband B2 in the foregoing terminal device. If the subband B1 is a channel used in current communication between the terminal device and the base station, when an eNB intends to clear the subband B1 or when quality of data transmission of the terminal device in the subband B1 is poor, the channel between the base station and the terminal device may be switched to the subband B2.

The configuring physical layer signaling further includes configuring the channel state information-reference signal CSI-RS information for each subband. For example, the CSI-RS information that is of each subband and that is measured by the terminal device includes at least one of: the period of the CSI-RS in the subband, the starting position of the CSI-RS in the subband, the offset position of the CSI-RS in the subband, and the port number of the CSI-RS in the subband.

In an example, to reduce consumption, separate parameters may be configured for different subbands. For example, the parameters corresponding to the subbands include different periods, different offset/starting positions, and different ports (port).

For example, subbands corresponding to B1 and B2 are configured. B1 is a main subband for data scheduling of the terminal device. The base station communicates with the terminal device by using a subband corresponding to the subband B1. Therefore, when a CSI-RS of the subband B1 is obtained, a short period can make a change in communication quality of the subband corresponding to the subband B1 to be obtained in time and switching is performed. B2 is a candidate subband for data transmission of the terminal device. Therefore, when a CSI-RS of the subband B2 is obtained, the period is long.

The base station sends the configured physical layer signaling to the terminal device. The base station sends the CSI-RS to user equipment in at least one of the plurality of subbands. For example, the first signaling includes the subband B1 and the subband B2. The subband B1 is a subband used in current communication between the base station and the terminal device. The subband B2 is a candidate subband. The base station sends the first signaling to the terminal device by using the subband B1. The terminal device obtains, based on the first signaling, channel state information of the plurality of subbands that are included in the first signaling.

S602. The terminal device receives the physical layer signaling sent by the base station.

After receiving the physical layer signaling, the terminal device obtains a CSI-RS included in the physical layer signaling.

S603. Perform measurement based on CSI-RS information included in the physical layer signaling to obtain channel state information.

In an example, the physical layer signaling is used to instruct to measure a CSI-RS for a subband, and the terminal device performs measurement based on the physical layer signaling, to obtain channel state information of the terminal device in the subband. The physical layer signaling usually includes a CSI-RS of only one subband. Therefore, when the base station needs to obtain a CSI-RS of the terminal device in a plurality of subbands, the base station needs to send physical layer signaling of a plurality of different subbands to the terminal device. The terminal device receives the physical layer signaling of the plurality of different subbands that is sent by the base station, and performs measurement for a plurality of times based on the physical layer signaling of the plurality of different subbands, to obtain channel state information of the terminal device in the plurality of different subbands.

The terminal device sends the channel state information obtained through measurement to the base station.

S604. Send the channel state information obtained through measurement to the base station.

The base station receives the channel state information sent by the terminal device, where the channel state information is obtained by measuring the CSI-RS sent within the valid time period.

In an example, a result that is of the CSI-RS measured by the terminal device and that is received by the base station includes measurement results of a subband 0110 and a subband 0111. The subband 0110 is a subband used in current communication between the base station and the terminal device. The subband 0111 is a candidate communications channel between the base station and the terminal device. If the base station determines, based on the result, that communication quality of the subband 0110 is poor and communication quality of the subband 0111 is relatively good, the base station changes the channel used in communication with the terminal device from the subband 0110 into the subband 0111.

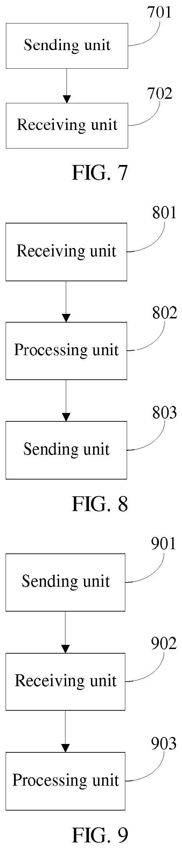

FIG. 7 is a schematic structural diagram of a base station according to a specific example useful for understanding the present invention. Referring to FIG. 7, the base station includes:
a sending unit 701, configured to send first signaling to a terminal device, where the first signaling includes channel state information-reference signal CSI-RS information of each of a plurality of subbands, and the CSI-RS information of each subband includes at least one of: a period of a CSI-RS in the subband, a starting position of the CSI-RS in the subband, an offset position of the CSI-RS in the subband, and a port number of the CSI-RS in the subband, where
the sending unit is further configured to send a CSI-RS in at least one of the plurality of subbands; and
a receiving unit 602, configured to receive channel state information sent by the terminal device, where the channel state information is obtained by measuring the CSI-RS sent in the at least one subband.

When the first signaling is higher layer signaling, the sending unit 701 is further configured to send first physical layer signaling to the terminal device. The terminal device measures, based on the first physical layer signaling, the CSI-RS sent in the at least one subband.

When the first signaling is higher layer signaling, the sending unit 701 is further configured to send second physical layer signaling to the terminal device. The terminal device stops, based on the second physical layer signaling, measuring the CSI-RS sent in the at least one subband.

When the first signaling is physical layer signaling, the physical layer signaling further includes a valid time period of the first signaling, so that the terminal device obtains, within the valid time period, channel state information of the plurality of subbands that are included in the first signaling.

FIG. 8 is a schematic structural diagram of a terminal device according to a specific example useful for understanding the present invention. As shown in FIG. 8, the terminal device includes:
a receiving unit 801, configured to receive first signaling sent by a sending unit 701 of a base station, where the first signaling includes channel state information-reference signal CSI-RS information of each of a plurality of subbands, and the CSI-RS information of each subband includes at least one of: a period of a CSI-RS in the subband, a starting position of the CSI-RS in the subband, an offset position of the CSI-RS in the subband, and a port number of the CSI-RS in the subband, where
the receiving unit is further configured to receive a CSI-RS in at least one of the plurality of subbands;
a processing unit 802, configured to measure the CSI-RS in the at least one subband, to obtain channel state information; and
a sending unit 803, configured to send the channel state information obtained through measurement by the terminal device to the base station.

When the first signaling is higher layer signaling, the receiving unit 801 is further configured to receive first physical layer signaling sent by the sending unit 701 of the base station. The first physical layer signaling is used to instruct the terminal device to measure the CSI-RS sent in the at least one subband.

When the first signaling is higher layer signaling, the receiving unit 801 is further configured to receive second physical layer signaling sent by the sending unit 701 of the base station. The second physical layer signaling is used to instruct the terminal device to stop measuring the CSI-RS sent in the at least one subband.

The first signaling is physical layer signaling, and the physical layer signaling further includes a valid time period of the first signaling. The processing unit 802 obtains, within the valid time period, channel state information of the plurality of subbands that are included in the first signaling.

FIG. 9 is a schematic structural diagram of a base station according to a specific embodiment of the present invention. As shown in FIG. 9, the base station includes:
a sending unit 901, configured to send second signaling to a terminal device, where the second signaling includes sounding reference signal SRS information of each of a plurality of subbands, the SRS information of each subband includes at leasta period of an SRS in the subband;
a receiving unit 902, configured to receive, in the at least one of the plurality of subbands, an SRS sent by the terminal device; and
a processing unit 903, configured to measure the received SRS of the at least one subband, to obtain channel state information.

When the second signaling is higher layer signaling, the sending unit 901 is further configured to send first physical layer signaling to the terminal device. The first physical layer signaling is used to instruct the terminal device to send the SRS of the at least one subband to the base station.

When the second signaling is higher layer signaling, the sending unit 901 is further configured to send second physical layer signaling to the terminal device. The second physical layer signaling is used to instruct the terminal device to stop sending the SRS of the at least one subband to the base station.

The first physical layer signaling further includes information used to indicate a valid time period of the first physical layer signaling.

When the second signaling is physical layer signaling, the terminal device sends a sounding reference signal to the base station based on the physical layer signaling. The sounding reference signal includes a subband in which uplink channel state information needs to be obtained.

FIG. 10 is a schematic structural diagram of a terminal device according to a specific embodiment of the present invention. As shown in FIG. 10, the terminal device includes:
a receiving unit 1001, configured to receive second signaling sent by a sending unit 901 of the base station, where the second signaling includes a subband in which uplink channel state information needs to be obtained and SRS information of each subband, and the SRS information of each subband includes at least a period of an SRS in the subband; and
a sending unit 1002, configured to send an SRS of at least one subband to the base station.

When the second signaling received by the receiving unit 1001 is higher layer signaling, the receiving unit 1001 is further configured to receive first physical layer signaling sent by the sending unit 901 of the base station. The first physical layer signaling is used to instruct the terminal device to send the SRS of the at least one subband to the base station.

When the second signaling received by the receiving unit 1001 is higher layer signaling, the receiving unit 1001 is further configured to receive second physical layer signaling sent by the sending unit 901 of the base station. The second physical layer signaling is used to instruct the terminal device to stop sending the SRS of the at least one subband to the base station.

The physical layer signaling further includes information used to indicate a valid time period of the physical layer signaling.

When the second signaling received by the receiving unit 1001 is physical layer signaling, the physical layer signaling further includes information about a valid time period of the physical layer signaling, so that the sending unit 1002 sends the sounding reference signal to the terminal device within the valid time period of the physical layer signaling.

FIG. 11 is a possible schematic structural diagram of the base station in the foregoing embodiments.

The base station includes a transmitter/receiver 1101, a controller/processor 1102, and a memory 1103. The transmitter/receiver 1101 is configured to support information receiving and sending between the base station and the terminal device in the foregoing embodiment. The transmitter/receiver 1101 may be the sending unit 701 shown in FIG. 7 and the sending unit 803 shown in FIG. 8. The transmitter/receiver 1101 may be the receiving unit 702 shown in FIG. 7 and the receiving unit 801 shown in FIG. 8. The processor/controller may be the processing unit 802 shown in FIG. 8.

The controller/processor 1102 performs various functions used to communicate with the terminal device. On an uplink, an uplink signal from the terminal device is received by an antenna, is tuned by the receiver 1101, and is further processed by the controller/processor 1102 to recover service data and signaling information that are sent by the terminal device. On a downlink, service data and a signaling message are processed by the controller/processor 1102, and are tuned by the transmitter 1101, to generate a downlink signal, and the downlink signal is transmitted to the terminal device by using an antenna. The memory 1103 is configured to store program code and data of the base station.

It may be understood that FIG. 11 shows merely a simplified design of the base station. In an actual application, the base station may include any quantity of transmitters, receivers, processors, controllers, memories, communications units, and the like, and all base stations that can implement the present invention shall fall within the protection scope of the present invention.

FIG. 12 is a simplified schematic diagram of a possible design structure of the terminal device in the foregoing embodiment. The terminal device includes a transmitter 1201, a receiver 1202, a controller/processor 1203, a memory 1204, and a modem processor 1205. The transmitter 1201 may be the sending unit 901 shown in FIG. 9 and the sending unit 1002 shown in FIG. 10. The receiver 1202 may be the receiving unit 902 shown in FIG. 9 and the receiving unit 1001 shown in FIG. 10. The processor/controller 1203 may be the processing unit 903 shown in FIG. 9.

The transmitter 1201 adjusts (for example, analog-converts, filters, amplifies, and up-converts) output sampling and generates an uplink signal. The uplink signal is transmitted to the base station in the foregoing embodiment by using an antenna. On a downlink, the antenna receives a downlink signal transmitted by the base station in the foregoing embodiment. The receiver 1202 adjusts (for example, filters, amplifies, down-converts, and digitizes) a signal received from the antenna and provides input sampling. In the modem processor 1205, an encoder 1206 receives service data and a signaling message that are to be sent on an uplink, and processes (for example, performs formatting, encoding, and interleaving on) the service data and the signaling message. A modulator 1207 further processes (for example, performs symbol mapping and modulation on) the encoded service data and signaling message and provides output sampling. A demodulator 1209 processes (for example, demodulates) the input sampling and provides symbol estimation. A decoder 1208 processes (for example, performs de-interleaving and decoding on) the symbol estimation and provides decoded data and a decoded signaling message that are to be sent to UE. The encoder 1206, the modulator 1207, the demodulator 1209, and the decoder 1208 may be implemented by the combined modem processor 1205. These units perform processing based on a radio access technology (for example, access technologies in an LTE system and other evolved systems) used in a radio access network.

The processor/controller 1203 controls and manages an action of the terminal device, and is configured to perform processing performed by the terminal device in the foregoing embodiment, for example, is configured to control the terminal device to perform measurement to obtain the channel state information and/or other processes of the technologies described in the present invention. The memory 1204 is configured to store program code and data used for the UE.

A person skilled in the art may be further aware that, in combination with the examples described in the embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person of ordinary skill in the art may understand that all or some of the steps in each of the foregoing methods of the embodiments may be implemented by a program instructing a processor. The foregoing program may be stored in a computer readable storage medium. The storage medium is a non-transitory (non-transitory) medium, such as a random-access memory, a read-only memory, a flash memory, a hard disk, a solid-state drive, a magnetic tape (magnetic tape), a floppy disk (floppy disk), an optical disc (optical disc), or any combination thereof.

The foregoing descriptions are merely examples of specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel state information sending method comprising:
sending (501), by a base station, second signaling to a terminal device, wherein the second signaling comprises sounding reference signal, SRS, information of each of a plurality of subbands, and the SRS information of each subband comprises at least a period of an SRS in the subband;
receiving (503), by the base station in at least one of the plurality of subbands, an SRS of at least one subband from the terminal device; and
measuring (504), by the base station, the SRS of the at least one subband, to obtain channel state information;
wherein
the at least one subband is the same as the plurality of subbands;
the second signaling is physical layer signaling, and the physical layer signaling further comprises a valid time period; and
the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period;
**characterized in that**
the valid time period of the physical layer signaling is one hour after the physical layer signaling is received,
wherein the physical layer signaling is used to indicate, to the terminal device, to:
stop sending the SRS of the at least one subband to the base station after receiving the physical layer signaling,
continue to send the SRS of the at least one subband to the base station after one hour, and
determine, based on newly received physical layer signaling after subsequently receiving the physical layer signaling, a state of executing the second signaling.

2. The method according to claim 1, wherein the second signaling is higher layer signaling, and after the sending, by the base station, second signaling to the terminal device, the method further comprises:
sending, by the base station, first physical layer signaling to the terminal device, wherein the first physical layer signaling is used to instruct the terminal device to send the SRS of the at least one subband to the base station.

3. The method according to claim 1 or 2, wherein the second signaling is higher layer signaling, and after the sending, by the base station, second signaling to the terminal device, the method further comprises:
sending, by the base station, second physical layer signaling to the terminal device, wherein the second physical layer signaling is used to instruct the terminal device to stop sending the SRS of the at least one subband to the base station.

4. A reference signal sending method, comprising:
receiving (502), by a terminal device, second signaling from a base station, wherein the second signaling comprises sounding reference signal, SRS, information of each of a plurality of subbands, and the SRS information of each subband comprises at least a period of an SRS in the subband; and
sending (503), by the terminal device, the SRS of at least one subband in at least one of the plurality of subbands;
wherein the at least one subband is the same as the plurality of subbands;
the second signaling is physical layer signaling, and the physical layer signaling further comprises a valid time period; and
the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period;
**characterized in that**
the valid time period of the physical layer signaling is one hour after the physical layer signaling is received,
wherein the methods further comprises:
stopping, by the terminal device, sending the SRS of the at least one subband to the base station after receiving the physical layer signaling,
continuing, by the terminal device, to send the SRS of the at least one subband to the base station after one hour, and
determining, by the terminal device based on newly received physical layer signaling after subsequently receiving the physical layer signaling, a state of executing the second signaling.

5. The method according to claim 4, wherein the second signaling is higher layer signaling, and after the receiving, by the terminal device, second signaling sent by the base station, the method further comprises:
receiving, by the terminal device, first physical layer signaling sent by the base station, wherein the first physical layer signaling is used to instruct the terminal device to send the SRS of the at least one subband to the base station.

6. The method according to claim 4 or 5, wherein the second signaling is higher layer signaling, and after the receiving, by the terminal device, second signaling sent by the base station, the method further comprises:
receiving, by the terminal device, second physical layer signaling sent by the base station, wherein the second physical layer signaling is used to instruct the terminal device to stop sending the SRS of the at least one subband to the base station.

7. A terminal device, **characterized by** comprising:
a receiving unit (1001), configured to receive second signaling from a base station, wherein the second signaling comprises sounding reference signal, SRS, information of each of a plurality of subbands, and the SRS information of each subband comprises at least a period of an SRS in the subband; and
a sending unit (1002), configured to send an SRS of at least one subband in at least one of the plurality of subbands;
wherein the at least one subband is the same as the plurality of subbands;
the first signaling is physical layer signaling, and the physical layer signaling further comprises a valid time period; and
the valid time period is shared by the plurality of subbands, and the valid time period is used to indicate that the terminal device sends the SRS of the at least one subband to the base station within the valid time period; or there are a plurality of valid time periods, each subband corresponds to one of the plurality of valid time periods, and each valid time period is used to indicate that the terminal device sends the SRS to the base station within the valid time period in a subband corresponding to the valid time period;
**characterized in that**
the valid time period of the physical layer signaling is one hour after the physical layer signaling is received,
wherein the terminal device is configured to:
stop sending the SRS of the at least one subband to the base station after receiving the physical layer signaling,
continue to send the SRS of the at least one subband to the base station after one hour, and
determine, based on newly received physical layer signaling after subsequently receiving the physical layer signaling, a state of executing the second signaling.

8. The terminal device according to claim 7, wherein the second signaling is higher layer signaling; and
the receiving unit is further configured to receive first physical layer signaling sent by the base station after receiving the second signaling sent by the base station, wherein the first physical layer signaling is used to instruct the terminal device to send the SRS of the at least one subband to the base station.

9. The terminal device according to claim 7 or 8, wherein the second signaling is higher layer signaling; and
the receiving unit is further configured to receive second physical layer signaling sent by the base station after receiving the second signaling sent by the base station, wherein the second physical layer signaling is used to instruct the terminal device to stop sending the SRS of the at least one subband to the base station.

10. A base station, comprising:
program instruction related hardware, wherein the hardware is configured to perform steps of the method according to any one of claims 1 to 3.

11. A computer program product, comprising computer program code, which, when executed by a base station, will cause the base station to perform the method according to any one of claims 1 to 3.

12. A computer program product, comprising computer program code, which, when executed by a terminal device, will cause the terminal device to perform the method according to any one of claims 4 to 6.

## Patentansprüche

1. Kanalstatusinformationen-Sendeverfahren, umfassend:
Senden (501), durch eine Basisstation, einer zweiten Signalisierung an ein Endgerät, wobei die zweite Signalisierung Sondierungsreferenzsignal- bzw. SRS-Informationen jedes einer Vielzahl von Teilbändern umfasst und die SRS-Informationen jedes Teilbands mindestens eine Periode eines SRS in dem Teilband umfassen;
Empfangen (503), durch die Basisstation in mindestens einem der Vielzahl von Teilbändern, eines SRS mindestens eines Teilbands von dem Endgerät; und
Messen (504), durch die Basisstation, des SRS des mindestens einen Teilbands, um Kanalstatusinformationen zu erlangen;
wobei das mindestens eine Teilband das gleiche wie die Vielzahl von Teilbändern ist;
die zweite Signalisierung eine Signalisierung der physikalischen Schicht ist und die Signalisierung der physikalischen Schicht ferner eine gültige Zeitperiode umfasst; und
die gültige Zeitperiode durch die Vielzahl von Teilbändern geteilt wird und die gültige Zeitperiode verwendet wird, anzugeben, dass das Endgerät das SRS des mindestens einen Teilbands an die Basisstation innerhalb der gültigen Zeitperiode sendet; oder es eine Vielzahl von gültigen Zeitperioden gibt, jedes Teilband mit einem der Vielzahl von gültigen Zeitperioden korrespondiert und jede gültige Zeitperiode verwendet wird, anzugeben, dass das Endgerät das SRS an die Basisstation innerhalb der gültigen Zeitperiode in einem Teilband korrespondierend mit der gültigen Zeitperiode sendet;
**dadurch gekennzeichnet, dass**
die gültige Zeitperiode der Signalisierung der physikalischen Schicht eine Stunde nach dem Empfangen der Signalisierung der physikalischen Schicht ist,
wobei die Signalisierung der physikalischen Schicht verwendet wird, dem Endgerät Folgendes anzugeben:
Stoppen des Sendens des SRS des mindestens einen Teilbands an die Basisstation nach dem Empfangen der Signalisierung der physikalischen Schicht,
Fortsetzen des Sendens des SRS des mindestens einen Teilbands an die Basisstation nach einer Stunde und
Bestimmen, basierend auf neu empfangener Signalisierung der physikalischen Schicht nach anschließendem Empfangen der Signalisierung der physikalischen Schicht, eines Ausführungsstatus der zweiten Signalisierung.

2. Verfahren nach Anspruch 1, wobei die zweite Signalisierung eine Signalisierung der höheren Schicht ist und das Verfahren nach dem Senden, durch die Basisstation, der zweiten Signalisierung an das Endgerät ferner umfasst:
Senden, durch die Basisstation, einer ersten Signalisierung der physikalischen Schicht an das Endgerät, wobei die erste Signalisierung der physikalischen Schicht verwendet wird, das Endgerät anzuweisen, das SRS des mindestens einen Teilbands an die Basisstation zu senden.

3. Verfahren nach Anspruch 1 oder 2, wobei die zweite Signalisierung eine Signalisierung der höheren Schicht ist und das Verfahren nach dem Senden, durch die Basisstation, der zweiten Signalisierung an das Endgerät ferner umfasst:
Senden, durch die Basisstation, einer zweiten Signalisierung der physikalischen Schicht an das Endgerät, wobei die zweite Signalisierung der physikalischen Schicht verwendet wird, das Endgerät anzuweisen, das Senden des SRS des mindestens einen Teilbands an die Basisstation zu stoppen.

4. Referenzsignal-Sendeverfahren, umfassend:
Empfangen (502), durch ein Endgerät, einer zweiten Signalisierung von einer Basisstation, wobei die zweite Signalisierung Sondierungsreferenzsignal- bzw. SRS-Informationen jedes einer Vielzahl von Teilbändern umfasst und die SRS-Informationen jedes Teilbands mindestens eine Periode eines SRS in dem Teilband umfassen; und
Senden (503), durch das Endgerät, des SRS mindestens eines Teilbands in mindestens einem der Vielzahl von Teilbändern;
wobei das mindestens eine Teilband das gleiche wie die Vielzahl von Teilbändern ist;
die zweite Signalisierung eine Signalisierung der physikalischen Schicht ist und die Signalisierung der physikalischen Schicht ferner eine gültige Zeitperiode umfasst; und
die gültige Zeitperiode durch die Vielzahl von Teilbändern geteilt wird und die gültige Zeitperiode verwendet wird, anzugeben, dass das Endgerät das SRS des mindestens einen Teilbands an die Basisstation innerhalb der gültigen Zeitperiode sendet; oder es eine Vielzahl von gültigen Zeitperioden gibt, jedes Teilband mit einem der Vielzahl von gültigen Zeitperioden korrespondiert und jede gültige Zeitperiode verwendet wird, anzugeben, dass das Endgerät das SRS an die Basisstation innerhalb der gültigen Zeitperiode in einem Teilband korrespondierend mit der gültigen Zeitperiode sendet;
**dadurch gekennzeichnet, dass**
die gültige Zeitperiode der Signalisierung der physikalischen Schicht eine Stunde nach dem Empfangen der Signalisierung der physikalischen Schicht ist,
wobei das Verfahren ferner umfasst:
Stoppen, durch das Endgerät, des Sendens des SRS des mindestens einen Teilbands an die Basisstation nach dem Empfangen der Signalisierung der physikalischen Schicht, Fortsetzen, durch das Endgerät, des Sendens des SRS des mindestens einen Teilbands an die Basisstation nach einer Stunde und
Bestimmen, durch das Endgerät, basierend auf neu empfangener Signalisierung der physikalischen Schicht nach anschließendem Empfangen der Signalisierung der physikalischen Schicht, eines Ausführungsstatus der zweiten Signalisierung.

5. Verfahren nach Anspruch 4, wobei die zweite Signalisierung eine Signalisierung der höheren Schicht ist und das Verfahren nach dem Empfangen, durch das Endgerät, einer durch die Basisstation gesandten zweiten Signalisierung ferner umfasst:
Empfangen, durch das Endgerät, einer durch die Basisstation gesandten ersten Signalisierung der physikalischen Schicht, wobei die erste Signalisierung der physikalischen Schicht verwendet wird, das Endgerät anzuweisen, das SRS des mindestens einen Teilbands an die Basisstation zu senden.

6. Verfahren nach Anspruch 4 oder 5, wobei die zweite Signalisierung eine Signalisierung der höheren Schicht ist und das Verfahren nach dem Empfangen, durch das Endgerät, einer durch die Basisstation gesandten zweiten Signalisierung ferner umfasst:
Empfangen, durch das Endgerät, einer durch die Basisstation gesandten zweiten Signalisierung der physikalischen Schicht, wobei die zweite Signalisierung der physikalischen Schicht verwendet wird, das Endgerät anzuweisen, das Senden des SRS des mindestens einen Teilbands an die Basisstation zu stoppen.

7. Endgerät, **dadurch gekennzeichnet, dass** es umfasst:
eine Empfangseinheit (1001), konfiguriert zum Empfangen einer zweiten Signalisierung von einer Basisstation, wobei die zweite Signalisierung Sondierungsreferenzsignal- bzw. SRS-Informationen jedes einer Vielzahl von Teilbändern umfasst und die SRS-Informationen jedes Teilbands mindestens eine Periode eines SRS in dem Teilband umfassen; und
eine Sendeeinheit (1002), konfiguriert zum Senden eines SRS mindestens eines Teilbands in mindestens einem der Vielzahl von Teilbändern:
wobei das mindestens eine Teilband das gleiche wie die Vielzahl von Teilbändern ist;
die erste Signalisierung eine Signalisierung der physikalischen Schicht ist und die Signalisierung der physikalischen Schicht ferner eine gültige Zeitperiode umfasst; und
die gültige Zeitperiode durch die Vielzahl von Teilbändern geteilt wird und die gültige Zeitperiode verwendet wird, anzugeben, dass das Endgerät das SRS des mindestens einen Teilbands an die Basisstation innerhalb der gültigen Zeitperiode sendet; oder es eine Vielzahl von gültigen Zeitperioden gibt, jedes Teilband mit einem der Vielzahl von gültigen Zeitperioden korrespondiert und jede gültige Zeitperiode verwendet wird, anzugeben, dass das Endgerät das SRS an die Basisstation innerhalb der gültigen Zeitperiode in einem Teilband korrespondierend mit der gültigen Zeitperiode sendet;
**dadurch gekennzeichnet, dass**
die gültige Zeitperiode der Signalisierung der physikalischen Schicht eine Stunde nach dem Empfangen der Signalisierung der physikalischen Schicht ist,
wobei das Endgerät konfiguriert ist zum:
Stoppen des Sendens des SRS des mindestens einen Teilbands an die Basisstation nach dem Empfangen der Signalisierung der physikalischen Schicht,
Fortsetzen des Sendens des SRS des mindestens einen Teilbands an die Basisstation nach einer Stunde und
Bestimmen, basierend auf neu empfangener Signalisierung der physikalischen Schicht nach anschließendem Empfangen der Signalisierung der physikalischen Schicht, eines Ausführungsstatus der zweiten Signalisierung.

8. Endgerät nach Anspruch 7, wobei die zweite Signalisierung eine Signalisierung der höheren Schicht ist; und
die Empfangseinheit ferner konfiguriert ist zum Empfangen einer durch die Basisstation gesandten ersten Signalisierung der physikalischen Schicht nach dem Empfangen der durch die Basisstation gesandten zweiten Signalisierung, wobei die erste Signalisierung der physikalischen Schicht verwendet wird, das Endgerät anzuweisen, das SRS des mindestens einen Teilbands an die Basisstation zu senden.

9. Endgerät nach Anspruch 7 oder 8, wobei die zweite Signalisierung eine Signalisierung der höheren Schicht ist; und
die Empfangseinheit ferner konfiguriert ist zum Empfangen einer durch die Basisstation gesandten zweiten Signalisierung der physikalischen Schicht nach dem Empfangen der durch die Basisstation gesandten zweiten Signalisierung, wobei die zweite Signalisierung der physikalischen Schicht verwendet wird, das Endgerät anzuweisen, das Senden des SRS des mindestens einen Teilbands an die Basisstation zu stoppen.

10. Basisstation, umfassend:
zu Programmanweisungen in Beziehung stehende Hardware, wobei die Hardware konfiguriert ist zum Durchführen von Schritten des Verfahrens nach einem der Ansprüche 1 bis 3.

11. Computerprogrammprodukt, umfassend Computerprogrammcode, der, wenn er durch eine Basisstation ausgeführt wird, die Basisstation zum Durchführen des Verfahrens nach einem der Ansprüche 1 bis 3 veranlassen wird.

12. Computerprogrammprodukt, umfassend Computerprogrammcode, der, wenn er durch ein Endgerät ausgeführt wird, das Endgerät zum Durchführen des Verfahrens nach einem der Ansprüche 4 bis 6 veranlassen wird.

## Revendications

1. Procédé d'envoi d'informations d'état de canal, comprenant :
l'envoi (501), par une station de base, d'une seconde signalisation à un dispositif de terminal, dans lequel la seconde signalisation comprend des informations de signal de référence de sondage, « Sounding Reference Signal » SRS, de chacune d'une pluralité de sous-bandes, et les informations de SRS de chaque sous-bande comprennent au moins une période d'un SRS dans la sous-bande ;
la réception (503), par la station de base, dans au moins une de la pluralité de sous-bandes, d'un SRS d'au moins une sous-bande, en provenance du dispositif de terminal ; et
la mesure (504), par la station de base, du SRS de l'au moins une sous-bande, pour obtenir des informations d'état de canal ;
dans lequel
l'au moins une sous-bande est la même que la pluralité de sous-bandes ;
la seconde signalisation est une signalisation de couche physique, et la signalisation de couche physique comprend en outre une période de temps valide ; et
la période de temps valide est partagée par la pluralité de sous-bandes, et la période de temps valide est utilisée pour indiquer que le dispositif de terminal envoie le SRS de l'au moins une sous-bande à la station de base dans les limites de la période de temps valide ; ou il y a une pluralité de périodes de temps valides, chaque sous-bande correspond à une de la pluralité de périodes de temps valides, et chaque période de temps valide est utilisée pour indiquer que le dispositif de terminal envoie le SRS à la station de base dans les limites de la période de temps valide dans une sous-bande correspondant à la période de temps valide ;
**caractérisé en ce que**
la période de temps valide de la signalisation de couche physique est une heure après que la signalisation de couche physique est reçue,
dans lequel la signalisation de couche physique est utilisée pour indiquer au dispositif de terminal :
d'arrêter l'envoi du SRS de l'au moins une sous-bande à la station de base après la réception de la signalisation de couche physique,
de continuer d'envoyer le SRS de l'au moins une sous-bande à la station de base après une heure, et
de déterminer, sur la base d'une signalisation de couche physique nouvellement reçue après la réception ensuite de la signalisation de couche physique, un état de l'exécution de la seconde signalisation.

2. Procédé selon la revendication 1, dans lequel la seconde signalisation est une signalisation de couche plus haute, et, après l'envoi, par la station de base, d'une seconde signalisation au dispositif de terminal, le procédé comprend en outre :
l'envoi, par la station de base, d'une première signalisation de couche physique au dispositif de terminal, dans lequel la première signalisation de couche physique est utilisée pour donner l'instruction au dispositif de terminal d'envoyer le SRS de l'au moins une sous-bande à la station de base.

3. Procédé selon la revendication 1 ou 2, dans lequel la seconde signalisation est une signalisation de couche plus haute, et, après l'envoi, par la station de base, d'une seconde signalisation au dispositif de terminal, le procédé comprend en outre :
l'envoi, par la station de base, d'une seconde signalisation de couche physique au dispositif de terminal, dans lequel la seconde signalisation de couche physique est utilisée pour donner l'instruction au dispositif de terminal d'arrêter l'envoi du SRS de l'au moins une sous-bande à la station de base.

4. Procédé d'envoi de signal de référence, comprenant :
la réception (502), par un dispositif de terminal, d'une seconde signalisation en provenance d'une station de base, dans lequel la seconde signalisation comprend des informations de signal de référence de sondage, « Sounding Reference Signal » SRS, de chacune d'une pluralité de sous-bandes, et les informations de SRS de chaque sous-bande comprennent au moins une période d'un SRS dans la sous-bande ; et
l'envoi (503), par le dispositif de terminal, du SRS d'au moins une sous-bande dans au moins une de la pluralité de sous-bandes ;
dans lequel l'au moins une sous-bande est la même que la pluralité de sous-bandes ;
la seconde signalisation est une signalisation de couche physique, et la signalisation de couche physique comprend en outre une période de temps valide ; et
la période de temps valide est partagée par la pluralité de sous-bandes, et la période de temps valide est utilisée pour indiquer que le dispositif de terminal envoie le SRS de l'au moins une sous-bande à la station de base dans les limites de la période de temps valide ; ou il y a une pluralité de périodes de temps valides, chaque sous-bande correspond à une de la pluralité de périodes de temps valides, et chaque période de temps valide est utilisée pour indiquer que le dispositif de terminal envoie le SRS à la station de base dans les limites de la période de temps valide dans une sous-bande correspondant à la période de temps valide ;
**caractérisé en ce que**
la période de temps valide de la signalisation de couche physique est une heure après que la signalisation de couche physique est reçue,
dans lequel le procédé comprend en outre :
l'arrêt, par le dispositif de terminal, de l'envoi du SRS de l'au moins une sous-bande à la station de base après la réception de la signalisation de couche physique,
la continuation, par le dispositif de terminal, de l'envoi du SRS de l'au moins une sous-bande à la station de base après une heure, et
la détermination, par le dispositif de terminal, sur la base d'une signalisation de couche physique nouvellement reçue après la réception ensuite de la signalisation de couche physique, d'un état de l'exécution de la seconde signalisation.

5. Procédé selon la revendication 4, dans lequel la seconde signalisation est une signalisation de couche plus haute, et, après la réception, par le dispositif de terminal, d'une seconde signalisation envoyée par la station de base, le procédé comprend en outre :
la réception, par le dispositif de terminal, d'une première signalisation de couche physique envoyée par la station de base, dans lequel la première signalisation de couche physique est utilisée pour donner l'instruction au dispositif de terminal d'envoyer le SRS de l'au moins une sous-bande à la station de base.

6. Procédé selon la revendication 4 ou 5, dans lequel la seconde signalisation est une signalisation de couche plus haute, et, après la réception, par le dispositif de terminal, d'une seconde signalisation envoyée par la station de base, le procédé comprend en outre :
la réception, par le dispositif de terminal, d'une seconde signalisation de couche physique envoyée par la station de base, dans lequel la seconde signalisation de couche physique est utilisée pour donner l'instruction au dispositif de terminal d'arrêter l'envoi du SRS de l'au moins une sous-bande à la station de base.

7. Dispositif de terminal, **caractérisé en ce qu'**il comprend :
une unité de réception (1001), configurée pour recevoir une seconde signalisation en provenance d'une station de base, dans lequel la seconde signalisation comprend des informations de signal de référence de sondage, « Sounding Reference Signal » SRS, de chacune d'une pluralité de sous-bandes, et les informations de SRS de chaque sous-bande comprennent au moins une période d'un SRS dans la sous-bande ; et
une unité d'envoi (1002), configurée pour envoyer un SRS d'au moins une sous-bande dans au moins une de la pluralité de sous-bandes ;
dans lequel l'au moins une sous-bande est la même que la pluralité de sous-bandes ;
la première signalisation est une signalisation de couche physique, et la signalisation de couche physique comprend en outre une période de temps valide ; et
la période de temps valide est partagée par la pluralité de sous-bandes, et la période de temps valide est utilisée pour indiquer que le dispositif de terminal envoie le SRS de l'au moins une sous-bande à la station de base dans les limites de la période de temps valide ; ou il y a une pluralité de périodes de temps valides, chaque sous-bande correspond à une de la pluralité de périodes de temps valides, et chaque période de temps valide est utilisée pour indiquer que le dispositif de terminal envoie le SRS à la station de base dans les limites de la période de temps valide dans une sous-bande correspondant à la période de temps valide ;
**caractérisé en ce que**
la période de temps valide de la signalisation de couche physique est une heure après que la signalisation de couche physique est reçue,
dans lequel le dispositif de terminal est configuré pour :
arrêter l'envoi du SRS de l'au moins une sous-bande à la station de base après la réception de la signalisation de couche physique,
continuer d'envoyer le SRS de l'au moins une sous-bande à la station de base après une heure, et
déterminer, sur la base d'une signalisation de couche physique nouvellement reçue après la réception ensuite de la signalisation de couche physique, un état de l'exécution de la seconde signalisation.

8. Dispositif de terminal selon la revendication 7, dans lequel la seconde signalisation est une signalisation de couche plus haute ; et
l'unité de réception est en outre configurée pour recevoir une première signalisation de couche physique envoyée par la station de base après la réception de la seconde signalisation envoyée par la station de base, dans lequel la première signalisation de couche physique est utilisée pour donner l'instruction au dispositif de terminal d'envoyer le SRS de l'au moins une sous-bande à la station de base.

9. Dispositif de terminal selon la revendication 7 ou 8, dans lequel la seconde signalisation est une signalisation de couche plus haute ; et
l'unité de réception est en outre configurée pour recevoir une seconde signalisation de couche physique envoyée par la station de base après la réception de la seconde signalisation envoyée par la station de base, dans lequel la seconde signalisation de couche physique est utilisée pour donner l'instruction au dispositif de terminal d'arrêter l'envoi du SRS de l'au moins une sous-bande à la station de base.

10. Station de base, comprenant :
un matériel connexe à instruction de programme, dans laquelle le matériel est configuré pour réaliser des étapes du procédé selon l'une quelconque des revendications 1 à 3.

11. Produit programme d'ordinateur, comprenant un code de programme d' ordinateur, qui, lorsqu'il est exécuté par une station de base, amènera la station de base à réaliser le procédé selon l'une quelconque des revendications 1 à 3.

12. Produit programme d'ordinateur, comprenant un code de programme d' ordinateur, qui, lorsqu'il est exécuté par un dispositif de terminal, amènera le dispositif de terminal à réaliser le procédé selon l'une quelconque des revendications 4 à 6.
